# EUROPÄISCHE PATENTANMELDUNG

(11) **EP 1 045 560 A2**
(43) Veröffentlichungstag der Anmeldung: **18.10.2000**
(21) Anmeldenummer: 00104269.6
(22) Anmeldetag: 01.03.2000
(51) Int. Cl.: H04L 12/58, H04Q 3/72, H04Q 3/70

(54) **Verfahren zur Meldung einer bereitstehenden elektronischen Nachricht**

(30) Priorität: 16.03.1999 DE 19911690
(71) Anmelder: SIEMENS AKTIENGESELLSCHAFT, 80333 München (DE)
(72) Erfinder: Neuhaus, Ralf, 44534 Lünen (DE); Henniger, Andreas, 45239 Essen (DE); Sablewski, Uwe, 33335 Gütersloh (DE); Ide, Hans-Dieter, Dr., 44287 Dortmund (DE); Geck, Bertram, 58239 Schwerte (DE)

(57) **Zusammenfassung**

Die Erfindung betrifft ein Verfahren zur Meldung einer auf einem E-mail-Server bereitstehenden elektronischen Nachricht über ein öffentliches Telekommunikationsnetz mit der Fähigkeit Dienstekennungen zu übertragen, insbesondere über ein ISDN-Netz, wobei vonseiten des E-mail-Servers der Empfänger der elektronischen Nachricht angewählt wird, der Empfänger die Telefonnummer des Anrufenden bestimmt und mit einer vorgegebenen Telefonnummer oder einer Liste von Telefonnummern vergleicht und gegebenenfalls den eingehenden Telefonanruf als Nachricht eines E-mail-Servers erkennt.

Das Verfahren ist dadurch gekennzeichnet, daß der Anruf von der Seite des E-mail-Servers mit einer spezifischen Dienstekennung versehen wird, die kein Klingelzeichen beim Empfänger auslöst.

## Beschreibung

Die Erfindung betrifft ein Verfahren zur Meldung einer auf einem E-mail-Server bereitstehenden elektronischen Nachricht über ein öffentliches Telekommunikationsnetz mit der Fähigkeit Dienstekennungen zu übertragen, insbesondere über ein ISDN-Netz, wobei vonseiten des E-mail-Servers der Empfänger der elektronischen Nachricht angewählt wird, der Empfänger die Telefonnummer des Anrufenden bestimmt und mit einer vorgegebenen Telefonnummer oder einer Liste von Telefonnummern vergleicht und gegebenenfalls den eingehenden Telefonanruf als Nachricht eines E-mail-Servers erkennt.

Ein ähnliches Verfahren ist aus der internationalen Anmeldung WO 98/42100 bekannt. Diese Anmeldung offenbart ein Verfahren zur Meldung einer bei einem Provider für einen Adressaten bereitstehenden E-mail über ein Telekommunikationsnetz mit den Verfahrensschritten: Anwählen des Adressaten durch den Provider mit einem vorgegebenen Telefonanschluß, Erkennen des einkommenden Telefonanrufes beim Adressaten, Bestimmen der Telefonnummer des Anrufenden, Vergleichen der Telefonnummer des Anrufenden mit einer vorgegebenen Telefonnummer oder Liste von Telefonnummern und Aktivieren eines vorbestimmten Programmablaufes in einem Computer oder Anzeigen des Vorliegens einer elektronischen Nachricht mit Hilfe eines E-mail-Melders.

Es ist Aufgabe der Erfindung ein verbessertes Verfahren zur Meldung einer, auf einem E-mail-Server bereitstehenden, elektronischen Nachricht darzustellen. Insbesondere soll die Möglichkeit geschaffen werden, die Nachricht für das Vorliegen einer E-mail kostenlos zu übersenden, ohne daß beim Empfänger neben der Telekommunikationsanlage beziehungsweise einem normalen Telekommunikationsendgerät (Telefon) besondere Gerätschaften vorgehalten werden müssen.

Die Aufgabe der Erfindung wird durch die Merkmale des Anspruches 1 gelöst.

Demgemäß schlagen die Erfinder vor, das bekannte Verfahren zur Meldung einer auf einem E-mail-Server bereitstehenden elektronischen Nachricht über ein öffentliches Telekommunikationsnetz mit der Fähigkeit Dienstekennungen zu übertragen, insbesondere über ein ISDN-Netz, zu verbessern. Das bekannte Verfahren enthält die Verfahrensschritte: Anwählen des Empfängers der elektronischen Nachricht seitens des E-mail-Servers, Bestimmen der Telefonnummer des Anrufenden beim Empfänger, Vergleichen der Telefonnummer des Anrufenden mit einer vorgegebenen Telefonnummer oder einer Liste von Telefonnummern und Erkennen des eingehenden Telefonanrufs beim Empfänger als Nachricht eines E-mail-Servers. Die erfindungsgemäße Verbesserung liegt darin, daß der Anruf von der Seite des E-mail-Servers mit einer spezifischen Dienstekennung versehen wird, die kein Klingelzeichen beim Empfänger auslöst.

Vorteilhaft ist es hierbei, wenn als spezifische Dienstekennung die Dienstekennung 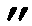 Daten" verwendet wird. Durch die Dienstekennung 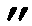 Daten" werden normale Telefonapparate nicht angesprochen.

Weiterhin ist es vorteilhaft, wenn durch das Erkennen des eingehenden Telefonanrufes eine Anzeige und/oder eine Tonsignalisierung auf mindestens einem Telekommunikationsendgerät auslöst wird. Hierbei kann es besonders vorteilhaft sein, wenn der vorgegebenen Telefonnummer oder der Liste von Telefonnummern ein Name oder ein Text zugeordnet ist, der im Display mindestens eines Telekommunikationsendgerätes angezeigt wird.

Eine weitere vorteilhafte Ausführung besteht darin, daß das Vorliegen einer elektronischen Nachricht auf mindestens einem Telekommunikationsendgerät dauerhaft signalisiert wird. Hierbei kann nach einer manuellen Bestätigung die Anzeige wieder gelöscht werden. Auf diese Weise kann der Nutzer des Telekommunikationsendgerätes auch informiert werden, wenn er beim Anruf seitens des E-mail-Servers sich nicht im Bereich des Telekommunikationsendgerätes aufhält, sondern erst später wieder an das entsprechende Telekommunikationsendgerät herantritt.

Eine weitere vorteilhafte Ausführung des Verfahrens sieht vor, daß jedes Erkennen eines eingehenden Anrufs von seiten eines E-mail-Servers einen Zähler betätigt und die Anzahl der vorliegenden elektronischen Nachrichten angezeigt wird. Auch hierbei ist es vorteilhaft, wenn der Zähler manuell zurückgesetzt werden kann.

Eine andere günstige Ausgestaltung des Verfahrens sieht vor, daß die Rufnummer und/oder eine Kennung des anrufenden E-mail-Servers gespeichert und gegebenenfalls auf dem Display des Telekommunikationsendgerätes angezeigt wird. Auf diese Weise kann der Nutzer erkennen - falls er mehrere E-mail-Server in seiner Benutzung hat - auf welchem E-mail-Server die bereitstehende Nachricht gespeichert ist.

Eine weitere Ausgestaltungsmöglichkeit des Verfahrens besteht darin, daß der Anruf des E-mail-Servers ein Programm (zum Beispiel in der Telekommunikationsanlage oder in einem angeschlossenen Computer) startet, das die vorliegenden elektronischen Nachrichten automatisch abholt. Hierzu muß natürlich die Telekommuniationsanlage oder der angeschlossene Computer den E-mail-Server entsprechend der mitgeteilten Rufnummer oder einer anderen gespeicherten Rufnummer anrufen und den an sich bekannten Abholvorgang für eine E-mail durchführen. Wird diese automatische Verfahrensweise genutzt, so kann anschließend automatisch die empfangene E-mail auf dem Display des entsprechenden Telekommunikationsendgerätes oder auch des Computers dargestellt beziehungsweise über einen Drucker ausgedruckt werden.

Insgesamt stellt also das erfindungsgemäße Verfahren eine neue Möglichkeit für Provider dar, den Endkunden beim Vorliegen einer elektronischen Nachricht kostengünstig, unter Nutzung vorhandener Telekommunikationsanlagen beziehungsweise Telekommunikationsendgeräten, über das Vorliegen der elektronischen Nachricht zu informieren.

Es versteht sich, daß die vorstehend genannten und nachstehend noch erläuterten Merkmale der Erfindung nicht nur in der jeweils angegebenen Kombination, sondern auch in anderen Kombinationen oder in Alleinstellung verwendbar sind, ohne den Rahmen der Erfindung zu verlassen.

Im Folgenden wird ein Beispiel der Ausführung des erfindungsgemäßen Verfahrens angegeben.

Besitzt ein Mailanbieter mehrere Einwahlpunkte (zum Beispiel T-Online), die zu einem zentralen oder mehreren dezentralen Mailservern führen, so können über diese Einwahlpunkte Mail-Clients aus unterschiedlichen Netzen (zum Beispiel ISDN, GSM, analoges Telefonnetz, ....) eine Datenverbindung zum Mailserver aufbauen, um eine E-mail zu senden oder vorliegende E-mails abzuholen.

Wenn eine neue E-mail für einen Client (Nutzer eines E-mail-Dienstes) an einem E-mail-Server eintrifft, so sucht der Server die dem Client zugeordnete Netz-Rufnummer aus einer bei ihm hinterlegten Tabelle und baut selbsttätig einen kurzen Benachrichtigungsruf auf. Dieser Ruf wird automatisch nach dem ersten Rufzyklus wieder abgebrochen, um unnötig lange Verarbeitungszeiten beim Server zu vermeiden.

Auf der Empfangsseite erkennt die Telekommunikationsanlage den verdeckten Ruf, wertet sofort den Diensttyp und die Rufnummer aus, die in der Telekommunikationsanlage mit einem Namen hinterlegt ist. Da der Ruf in der Telekommunikationsanlage nicht angenommen wurde, wird der Ruf bei dem gerufenen Teilnehmer in die Anruferliste/Liste entgangener, also nicht angenommener Anrufe eingetragen und über das Einschalten einer LED signalisiert.

Der Telefonbenutzer kann wählen, ob ihm der Anruf auch über einen speziellen Signalton angezeigt werden soll. Nach dem verdeckten Anruf leuchtet eine LED an einer Taste des Endgerätes, über die dann auch die Anzahl der neu eingegangenen Nachrichten abgefragt werden kann. Im Display erscheint: 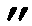 Neue Mail 4x". Diese Funktionalität kann wahlweise mit der Anruferliste kombiniert werden und auch als getrennte Funktion auf eine eigene Taste gelegt werden.

Durch die Erfindung wird somit ein verbessertes Verfahren zur Meldung einer, auf einem E-mail-Server bereitstehenden, elektronischen Nachricht dargestellt. Insbesondere wird die Möglichkeit geschaffen, die Nachricht für das Vorliegen einer E-mail kostenlos zu übersenden, ohne daß beim Empfänger neben der Telekommunikationsanlage beziehungsweise einem normalen Telekommunikationsendgerät (Telefon) besondere Gerätschaften vorgehalten werden müssen.

## Patentansprüche

1. Verfahren zur Meldung einer auf einem E-mail-Server bereitstehenden elektronischen Nachricht über ein öffentliches Telekommunikationsnetz mit der Fähigkeit Dienstekennungen zu übertragen, insbesondere über ein ISDN-Netz, mit den folgenden Verfahrensschritten:
- anwählen des Empfängers der elektronischen Nachricht seitens des E-mail-Servers,
- bestimmen der Telefonnummer des Anrufenden beim Empfänger,
- vergleichen der Telefonnummer des Anrufenden mit einer vorgegebenen Telefonnummer oder Liste von Telefonnummern,
- erkennen des eingehenden Telefonanrufs beim Empfänger als Nachricht eines E-mail-Servers,
dadurch gekennzeichnet, daß
- der Anruf von der Seite des E-mail-Servers mit einer spezifischen Dienstekennung versehen wird, die kein Klingelzeichen beim Empfänger auslöst.

2. Verfahren gemäß dem vorstehenden Anspruch 1, dadurch gekennzeichnet, daß die spezifische Dienstekennung die Dienstekennung 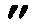 Daten" ist.

3. Verfahren gemäß einem der vorstehenden Ansprüche 1 bis 2, dadurch gekennzeichnet, daß das Erkennen des eingehenden Telefonanrufes eine Anzeige und/oder eine Tonsignalisierung auf mindestens einem Telekommunikationsendgerät auslöst.

4. Verfahren gemäß einem der vorstehenden Ansprüche 1 bis 3, dadurch gekennzeichnet, daß der vorgegebenen Telefonnummer oder der Liste von Telefonnummern ein Name oder Text zugeordnet ist, der im Display mindestens eines Telekommunikationsendgerätes angezeigt wird.

5. Verfahren gemäß einem der vorstehenden Ansprüche 1 bis 3, dadurch gekennzeichnet, daß der eingehende Anruf von Seite des E-mail-Servers keine Verbindungskosten verursacht.

6. Verfahren gemäß einem der vorstehenden Ansprüche 1 bis 5, dadurch gekennzeichnet, daß das Vorliegen einer elektronischen Nachricht auf mindestens einem Telekommunikationsendgerät dauerhaft - bis zur manuellen Bestätigung - signalisiert wird.

7. Verfahren gemäß einem der vorstehenden Ansprüche 1 bis 6, dadurch gekennzeichnet, daß jedes Erkennen eines eingehenden Anrufs von Seiten eines E-mail-Servers einen Zähler betätigt und die Anzahl der vorliegenden elektronischen Nachrichten angezeigt wird.

8. Verfahren gemäß dem vorstehenden Anspruch 7, dadurch gekennzeichnet, daß der Zähler manuell zurückgesetzt werden kann.

9. Verfahren gemäß einem der vorstehenden Ansprüche 1 bis 8, dadurch gekennzeichnet, daß die Rufnummer oder eine Kennung des anrufenden E-mail-servers gespeichert und gegebenenfalls angezeigt wird.

10. Verfahren gemäß einem der vorstehenden Ansprüche 1 bis 9, dadurch gekennzeichnet, daß der Anruf des E-mail-Servers ein Programm startet, das die vorliegenden elektronischen Nachrichten automatisch abholt.
